# EUROPEAN PATENT SPECIFICATION

(11) **EP 2 759 702 B1**
(45) Date of publication and mention of the grant of the patent: **25.04.2018**
(21) Application number: 12801438.8
(22) Date of filing: 24.02.2012
(51) Int. Cl.: F03D 15/00

(54) **RENEWABLE ENERGY-TYPE ELECTRIC POWER GENERATION DEVICE AND METHOD FOR OPERATING RENEWABLE ENERGY-TYPE ELECTRIC POWER GENERATION DEVICE**
VORRICHTUNG ZUR STROMERZEUGUNG AUS ERNEUERBARER ENERGIE UND BETRIEBSVERFAHREN DAFÜR
DISPOSITIF DE PRODUCTION D'ÉNERGIE ÉLECTRIQUE DU TYPE ÉNERGIE RENOUVELABLE ET PROCÉDÉ DE FONCTIONNEMENT DE DISPOSITIF DE PRODUCTION D'ÉNERGIE ÉLECTRIQUE DU TYPE ÉNERGIE RENOUVELABLE

(30) Priority: 22.09.2011 WO PCT/JP2011/071676; 22.09.2011 WO PCT/JP2011/071677; 30.11.2011 WO PCT/JP2011/077625
(43) Date of publication of application: 30.07.2014
(73) Proprietor: Mitsubishi Heavy Industries, Ltd., Tokyo 108-8215 (JP)
(72) Inventor: KAMEDA, Takuro, Tokyo 108-8215 (JP)
(74) Representative: Intès, Didier Gérard André
(86) International application number: PCT/JP2012/054617
(87) International publication number: WO 2013/042385

(56) References cited:
- EP-A2- 2 072 814
- JP-A- S57 193 781
- JP-A- 2004 339 953
- JP-A- 2004 353 525
- JP-A- 2005 248 738
- JP-A- 2009 513 882
- JP-A- 2010 031 673
- JP-A- 2010 281 274
- US-A- 4 586 400

## Description

### [Technical Field]

The present invention relates to a power generating apparatus of a renewable energy type for generating power by transmitting rotational energy of a rotor to a generator and also relates to an operation method of the power generating apparatus of the renewable energy type. The power generating apparatus of the renewable energy type generates power from renewable energy such as wind, tidal current, ocean current and river current and, for instance, includes a wind turbine generator, a tidal generator, an ocean current generator, a river current generator or the like.

### [Background Art]

In recent years, from a perspective of preserving the environment, it is becoming popular to use a power generating apparatus of renewable energy type such as a wind turbine generator utilizing wind power and a renewable energy type turbine generator such as a tidal current generator utilizing tidal. In the power generating apparatus of the renewable energy type, motion energy of the wind, the tidal current, the ocean current or the river current is converted into the rotational energy of the rotor and the rotational energy of the rotor is converted into electric power by the generator.

In the power generating apparatus of the renewable energy type, the rotor is decelerated and stopped for safety reasons when replacing the blade, when performing maintenance on device components, when allowing access of a helicopter for transporting workers to the power generating apparatus of the renewable energy type, etc.

The rotor is decelerated and stopped normally by reducing renewable energy received by the rotor mainly through pitch angle adjustment of the blade (pitch control). Further, the pitch angle adjustment of the blade is performed by an actuator such as a hydraulic cylinder and an electric motor.

However, a change rate of the pitch angle using an existing pitch drive system is approximately 3 deg/sec to 5 deg/sec and not so excellent in responsiveness. Thus, it is difficult to stop the rotor at a desired angular position solely by the pitch control. This is due to the fact that the torque applied to the rotor from the renewable energy source is heavily influenced by change in the flow speed of the renewable energy and it is difficult to precisely adjust the position of the rotor solely by the pitch control, which has low responsiveness.

There is technique for decelerating or stopping the rotor using a braking force by a brake system and also adjusting an angular position of the rotor using a turning unit.

For instance, proposed in Patent Literature 1 is a power generating apparatus of a renewable energy type with a gearbox for accelerating rotation of the rotor and transmitting it to a generator. In the power generating apparatus of the renewable energy type, the rotor is decelerated using a brake system having a brake disk and a brake shoe provided on a high-speed shaft connecting the gearbox to the generator. On an outer edge of the brake disk, an external gear engageable with a turning gear of the turning unit is formed. A rotational torque outputted from a gear motor of the turning unit is transmitted to the high-speed shaft via the brake disk.

The rotational torque transmitted to the high-speed shaft is decelerated via the gearbox and transmitted to a low-speed shaft on the rotor side. Thus, even when a relatively large rotational torque is required to turn the rotor, the rotational torque outputted from the turning unit can be fairly small thanks to speed reduction performed by the gearbox.

In Patent Literature 2, the rotor is first decelerated and stopped using the brake disk provided on the main shaft rotating with the rotor, and then the rotor is turned by connecting a rotating means (the turning unit) to the brake disk and driving the rotating means. The brake disk to which the rotating means is connected is provided on the main shaft rotating with the rotor. As the torque required for turning the main shaft increases, a hydraulic cylinder capable of outputting high torque is used as the turning unit.

There are a variety of other turning devices and some are described in Patent Literature 3 and Patent Literature 4.

### [Citation List]

### [Patent Literature]

[PTL 1]
   US 8028604 B
[PTL 2]
   WO 2010/103086 A
[PTL 3]
   US 2010/0194114 A
[PTL 4]
   WO 2005/090780 A

US 4 586 400 discloses another example of interconnecting device in a wind power plant.

### [Summary of Invention]

### [Technical Problem]

In the technique described in Patent Literature 1 and Patent Literature 2, a worker is required to go inside the nacelle for attaching the turning unit to the turning disk (the brake disk) provided on the main shaft and thus work efficiency is not good. More specifically, the turning unit of the above literatures is removed from a body of the power generating apparatus of the renewable energy type on normal basis when the turning operation is not needed, and attached to the body by the worker when needed. Particularly in the case where it is difficult to have access to the power generating apparatus such the case of an offshore wind turbine generator, it is desirable to reduce workload of workers.

In view of the above issues, it is an object of the present invention to provide a power generating apparatus of a renewable energy type provided with a turning unit which is capable of adjusting a rotor having been decelerated and stopped to any angular position without accompanying burdensome work, as well as an operation method of the power generating apparatus of the renewable energy type.

### [Solution to Problem]

According to the present invention, a power generating apparatus of a renewable energy type, defined in claim 1, for generating electric power using renewable energy, comprises:
a blade;
a hub to which the blade is mounted;
a main shaft connected to the hub so as to rotate with the hub;
a generator configured to be driven by rotation of the main shaft; and
a turning unit, and
the turning unit comprises: a driving source configured to output a rotational torque for rotating the main shaft; and a switching system provided between the driving source and the main shaft and configured to switch a state of the main shaft between: a turning state for turning the main shaft by transmission of the rotational torque from the driving source to the main shaft; and a non-turning state for disabling the transmission of the rotational torque between the driving source and the main shaft.

In this power generating apparatus of the renewable energy type, the state of the main shaft is switchable between the turning state and the non-turning state by means of the switching system. Thus, the rotor having been decelerated or stopped can be easily turned to any angular position without requiring workers to perform complicated operation of attaching the turning unit.

The above power generating apparatus of the renewable energy type further comprises:
a turning disk provided on the main shaft, the turning disk having a larger diameter than the main shaft; and
a reduction gear provided between the turning disk and the switching system, and
in the turning state, the rotational torque outputted from the driving source may be transmitted to the turning disk via the reduction gear so as to rotate the main shaft.

Conventionally, in a power generating apparatus of a renewable energy type using a gearbox, the rotation torque is applied to the turning disk provided on a high-speed shaft side so as to reduce the output torque from the motor by speed reduction performed by the gearbox. However, in a power generating apparatus of a renewable energy type without the gearbox cannot have this speed reduction effect and thus, the motor output increases significantly, creating an issue of increased size and cost of the turning unit.

Therefore, in this aspect, the rotational torque from the driving source is transmitted via the reduction gear. Thus, even in the case where the turning disk is attached to the main shaft being a low-speed shaft rotating at a low speed with the hub, the output torque from the motor can be reduced by speed reduction performed by the reduction gear. As a result, it is possible to effectively avoid size and cost increase of the turning unit.

The above power generating apparatus of the renewable energy type may further comprise a first braking unit for outputting a braking torque, and the switching system is configured to further select a braking state for transmitting the braking torque from the first braking unit to the main shaft.

In this aspect, the braking state for applying the braking force to the main shaft is also selectable in addition to the turning state and the non-turning state. As a result, it is now possible, for instance, to decelerate or stop the rotation of the rotor in the operation state, or to maintain the rotor in a stopped state during maintenance or access of a helicopter in a safe manner.

In the above power generating apparatus of the renewable energy type, the switching system may comprise:
a plurality of planetary gears;
a ring gear having internal teeth meshing with the plurality of planetary gears; and
a sun gear arranged to be surrounded by the plurality of planetary gears and meshing with the plurality of planetary gears, and
one of the driving source, the main shaft or the first braking unit may be connected to one of the planetary gear, the ring gear or the sun gear,
another of the driving source, the main shaft or the first braking unit may be connected to another of the planetary gear, the ring gear or the sun gear, and
the other of the driving source, the main shaft or the first braking unit may be connected to the other of the planetary gear, the ring gear or the sun gear.

In this aspect, the switching system includes the planetary gear system and a state of each of the planetary gear, the ring gear and the sun gear is appropriately changed by controlling the driving source, the main shaft and the first braking unit so as to perform switching of each state. By changing the state of the planetary gear, the ring gear and the sun gear in this manner, the state of the switching system can be controlled. As a result, the turning unit can be installed to the main shaft permanently and it is no longer necessary for workers to install and remove the turning unit.

Particularly, by using the planetary gear as the switching system, it is possible to control behavior of the planetary gear, the ring gear and the sun gear depending on the application state of the braking force from the first braking unit. As a result, it is practically possible to switch the state of the main shaft among the above states by means of the turning unit without disconnecting the turning unit from the main shaft. Therefore, the power generating apparatus of the renewable energy provided with the highly reliable turning unit can be attained while avoiding risks such as abrasion of gears due to the disengaging operation, damages of gears caused by poor engagement between the gears.

In this case, the driving source may be connected to the sun gear, the main shaft may be connected to the planetary gear, and the first braking unit may be connected to the ring gear.

By connecting the driving source, the main shaft and the first braking unit to the planetary gear system in this manner, the rotational torque outputted from the driving source can be transmitted to the main shaft with a high reduction ratio. Thus, it is possible to suppress the output torque from the driving source even more effectively.

Further, in the above power generating apparatus of the renewable energy type, a second braking unit for controlling braking of the driving source may be provided.

By controlling braking of the driving source by the second braking unit, it is possible to prevent failure caused by the driving source being driven carelessly by the rotational torque transmitted from the main shaft. As one example of this type of failure, in the case where the driving source is a motor, malfunction may occur, such as engine seizure when the driving source is driven carelessly and electric power is generated, resulting in heat generation. In this aspect, these situations can be effectively avoided and reliability can be improved.

In this case, a braking force by the second braking unit may be set larger than a braking force by the first braking unit.

In the case where the main shaft is stopped by switching to the braking state by means of the switching unit, even when the main shaft is subjected to excessive input such as in the event of gust, by allowing the first braking unit side to slip, whose braking force is smaller than that of the second braking unit, it is possible to prevent breakage of the turning unit. Particularly by allowing the first breaking unit side to slip, it is possible to prevent the driving source from being driven carelessly even in the event of excessive input.

In the above power generating apparatus of the renewable energy type, the switching system may comprise:
a plurality of parallel-axis gears including a pinion and a gear whose rotational axes are parallel to each other; and
a driving unit for moving the pinion and the gear into an engaging position in the turning state and moving the pinion and the gear into a non-engaging position in the non-turning state.

According to this embodiment, the switching system is configured to change positions of the pinion and the gear forming the parallel-axis gears by means of the driving unit. As the state of the turning unit can be controlled by switching the state of the main shaft by the driving unit, the turning unit can be installed to the main shaft permanently and it is no longer necessary for workers to install and remove the turning unit.

The above power generating apparatus of the renewable energy type may further comprise:
a hydraulic pump configured to be driven by rotation of the hub; and
a hydraulic motor configured to be driven by operating oil pressurized by the hydraulic pump so as to drive the generator.

In the power generating apparatus of the renewable energy type using this hydraulic transmission, a rotational torque necessary for the turning operation needs to be applied to the main shaft side which is a low-speed shaft rotating with the rotor. As described above, according to this power generating apparatus of the renewable energy type, the rotational torque from the driving source is amplified by speed reduction performed by the switching system and the amplified rotational torque is transmitted to the rotation shaft side. This accompanies no increase in size or cost of the turning unit.

Further, the main shaft may be directly connected to a rotation shaft of the generator so as to rotate at the same speed as the rotation shaft.

Similarly to the case of the power generating apparatus using the hydraulic transmission, in the case of the power generating apparatus of a direct-drive type, the rotational torque necessary for the turning operation needs to be applied to the main shaft side which rotates with the rotor. Therefore, according to this power generating apparatus of the renewable energy type, the rotational torque from the driving source can be amplified by speed reduction performed by the switching system and then transmitted to the main shaft side. This accompanies no increase in size or cost of the turning unit.

Furthermore, the power generating apparatus of the renewable energy type may further comprise a control unit for controlling switching of the switching system.

In this aspect, it is possible to operate the switching system based on a control signal outputted from the control unit without accompanying burdensome work for workers. For instance, this makes it possible to operate the turning unit remotely even in a power plant installed where it is hard to access.

The above power generating apparatus of the renewable energy type may be a wind turbine generator for generating power using wind power in a form of the renewable energy.

According to the present invention, provided is an operation method defined in claim 8 for a power generating apparatus of a renewable energy type which comprises: a blade; a hub to which the blade is mounted; a main shaft configured rotatable with the hub by connecting the main shaft to the hub; a generator configured to be driven by rotation of the main shaft; and a turning unit including a switching system configured to selectively change a turning state for turning the main shaft by transmission of a rotational torque from a driving source to the main shaft or a non-turning state for shutting off the transmission of the rotational torque between the driving source and the main shaft. The switching system includes a planetary gear system comprising: a sun gear connected to the driving source; a planetary gear connected to the main shaft; and a ring gear connected to a first braking unit, and the operation method further comprising a step of rotating the main shaft in the turning state by stopping and locking the ring gear by the first braking unit and outputting the rotational torque from the driving source.

According to this operation method, in the switching system having the planetary gear system, the ring gear is locked by the first braking unit and thus, the rotational torque outputted from the driving source connected to the sun gear is transmitted to the planetary gear. As a result, the main shaft connected to the planetary gear can be turned by the rotational torque from the driving source by speed reduction performed by the planetary gear system.

The switching system further comprises a second braking unit for controlling braking of the driving source and the operation method may further comprise a step of rotating the ring gear at idle in the non-turning state by stopping the driving source by the second braking unit to lock the sun gear and stopping the braking force from the first braking unit.

According to this operation method, in the switching system having the planetary gear system, the sun gear connected to the driving source is locked by the second braking unit and it prohibits the first braking unit from applying the braking force. As a result, the ring gear connected to the first braking unit becomes free. Thus, the rotational torque is inputted to the planetary gear connected to the main shaft by rotation of the main shaft and the inputted rotational torque is transmitted to the ring gear. As described above, the ring gear is free and thus the ring gear turns at idle by the transmitted rotational torque. More specifically, in the non-turning state, the driving source is disengaged from the main shaft side. By using the planetary gear in this manner, it is practically possible to switch the state of the main shaft without disconnecting the turning unit from the main shaft.

Further, the switching system may be configured to further select a braking state for stopping the main shaft, and the operation method may further comprise a step of stopping the main shaft in the braking state by stopping and locking the ring gear by the first braking unit and stopping and locking the sun gear by the second braking unit.

According to this operation method, in the switching system having the planetary gear system, the ring gear is locked by the first braking unit and the sun gear connected to the driving source is locked by the second braking unit, thereby locking the planetary gear. As a result, by applying the braking force to the main shaft connected to the planetary gear, the braking state can be achieved.

### [Effects of The Invention]

According to the present invention, the state of the main shaft is switchable between the turning state and the non-turning state by means of the switching system. Thus, the rotor having been decelerated or stopped can be turned easily to any angular position without requiring workers to perform complicated operation of attaching the turning unit.

### [Brief Description of Drawings]

[FIG.1]

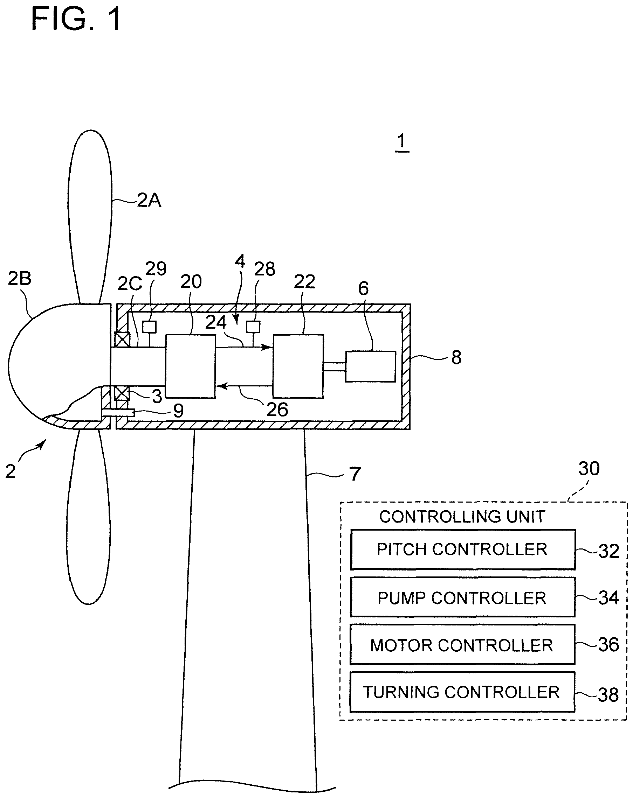

   FIG.1 is an illustration of a configuration of a wind turbine generator according to a first embodiment.
[FIG.2]

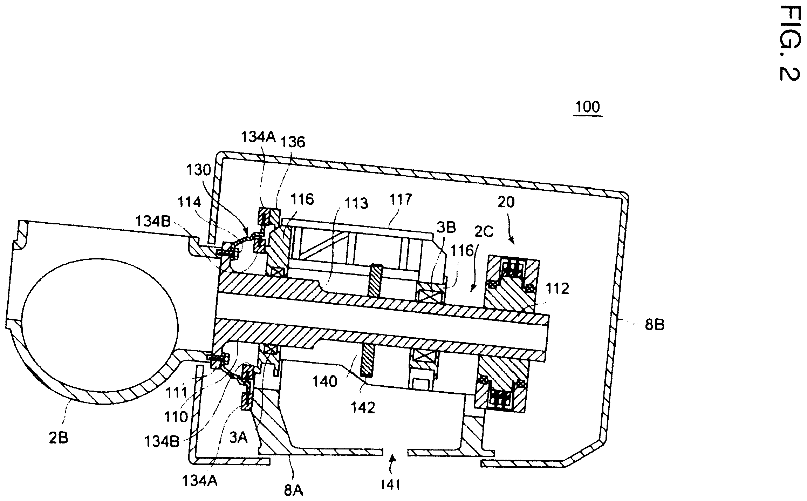

   FIG.2 is a cross-sectional view of an inner structure of a nacelle.
[FIG.3]

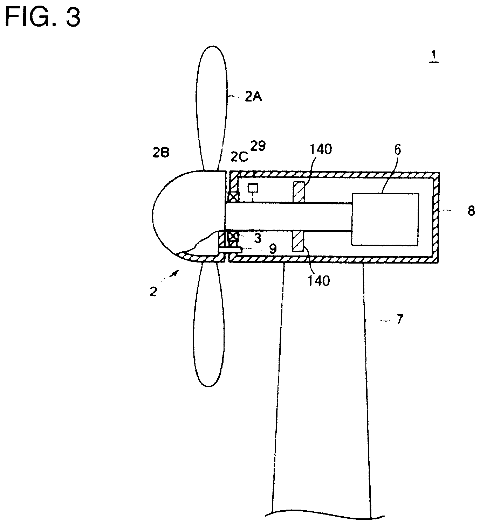

   FIG.3 is a schematic view of an inner structure of a nacelle of a direct-drive wind turbine generator.
[FIG.4]

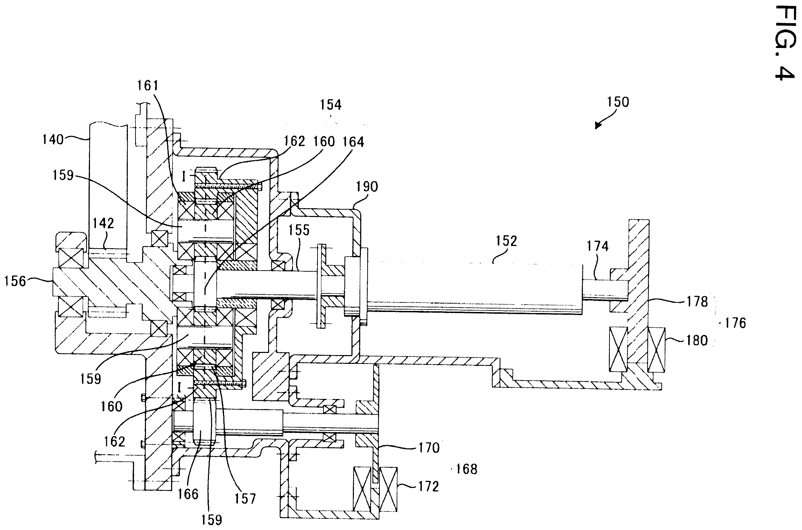

   FIG.4 is a cross-sectional view of a configuration example of a turning unit in relation to the first embodiment.
[FIG.5]

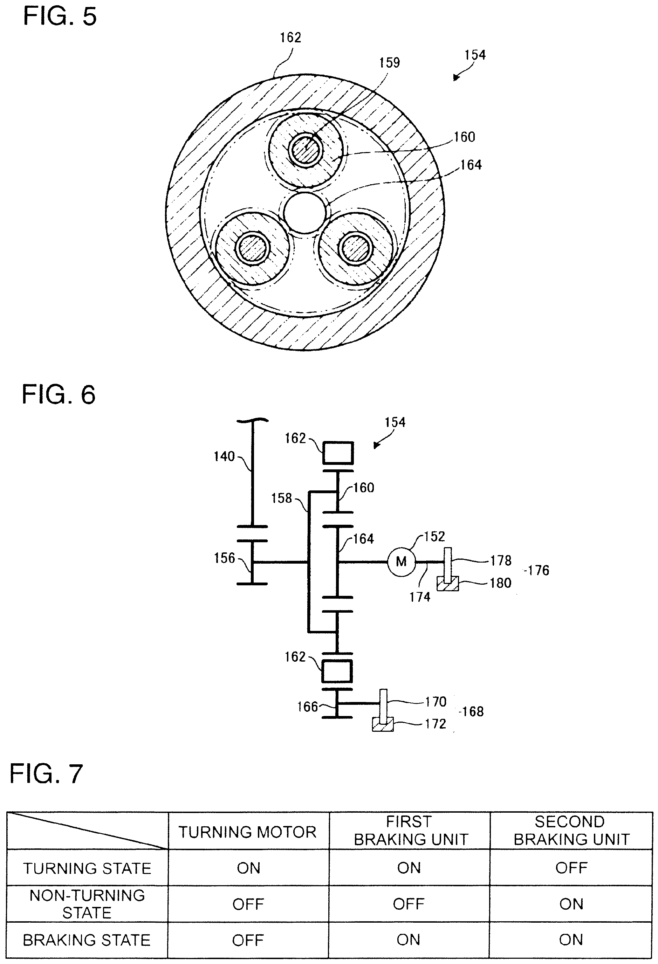

   FIG.5 is a cross-sectional view taken along a line I-I of FIG.4.
[FIG.6]
   FIG.6 is a conceptual diagram schematically illustrating a transmission of power in the turning unit of FIG.4.
[FIG.7]
   FIG.7 is a table showing operation states of each of a turning motor, a first brake system and a second brake system.
[FIG.8]

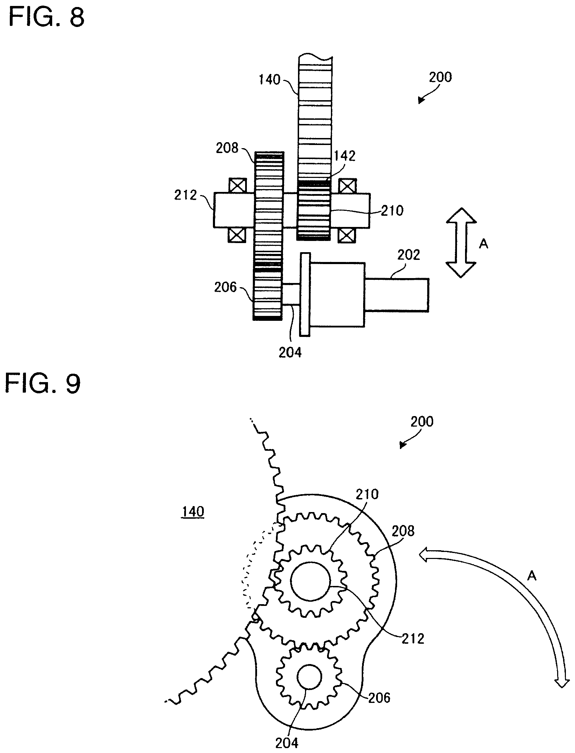

   FIG.8 is a plain view of a configuration example of a turning unit in relation to a second embodiment.
[FIG.9]
   FIG.9 is a schematic view of the turning unit of FIG.8 taken from a side.
[FIG.10]

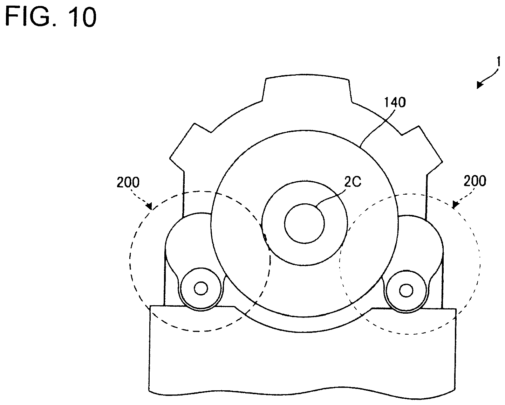

   FIG.10 is an installation example in the case where a plurality of turning units is installed with respect to a turning disk.

### [Description of Embodiments]

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present.

In the following embodiments, a wind turbine generator is described as an example of the power generating apparatus of the renewable energy type. However, this is not limitative and the present invention is also applicable to other types of power generating apparatuses of a renewable energy type such as a tidal generator, an ocean current generator and a river current generator.

### [FIRST EMBODIMENT]

FIG.1 is an illustration of a configuration of a wind turbine generator 1 according to a first embodiment.

The wind turbine generator 1 is mainly provided with a rotor 2 rotating upon receiving wind, a hydraulic transmission 4 for increasing a rotation speed of the rotor 2, a generator 6 for generating electric power, and a control unit 30 for controlling a variety of components in the wind turbine generator 1.

The rotor 2 is formed by a blade 2A, a hub 2B to which the blade 2A is mounted, and a main shaft 2C connected to the hub 2B. With this configuration, the entire rotor 2 is rotated by a force of the wind received by the blade 2A and the rotation is inputted from the main shaft 2C to the hydraulic transmission 4. The angular position (rotational displacement) of the rotor 2 is measured by an angular position detector 29 attached to the main shaft 2C and used for performing control in the control unit 30. The angular position detector 29 may be, for instance, a rotary encoder or a resolver.

The main shaft 2C of the rotor 2 is housed in a nacelle 8 rotatably supported by a tower 7 (see FIG.2). The nacelle 8 supports the main shaft 2C via a main shaft bearing 3.

The control unit 30 includes a pitch controller 32 for controlling a pitch angle of the blade 2A, a pump controller 34 for controlling a hydraulic pump 20 described later, a motor controller 36 for controlling a hydraulic motor 22 described later, and a turning controller 38 for causing the rotor 2 having been stopped to perform a turning operation.

The turning controller 40 functions as a controller for controlling a switching operation performed by a switching system which is described later in details. As a result, it is possible to operate the switching system based on a control signal outputted from the controller without accompanying burdensome work for workers. For instance, this makes it possible to operate the turning unit remotely even in a power plant installed where it is hard to access.

The rotor 2 is configured to be locked by a locking pin 9. The locking pin 9 is inserted into each of the holes formed on the rotor 2 side and on the nacelle 8 side to lock the rotor 2. The configuration of the locking pin 9 and the holes where the locking pin 9 is inserted are not particularly limited as long as the rotor 2 can be locked.

The hydraulic transmission 4 is provided with the hydraulic pump 20 of a variable displacement type driven by rotation of the main shaft 2C, the hydraulic motor 22 of a variable displacement type connected to the generator 6, a high pressure oil line 24 and a low pressure oil line 26 arranged between the hydraulic pump 20 and the hydraulic motor 22.

An outlet port of the hydraulic pump 20 is connected to an inlet port of the hydraulic motor 22 by the high pressure oil line 24. An inlet port of the hydraulic pump 20 is connected to an outlet port of the hydraulic motor 22 by the low pressure oil line 26. The operating oil (high pressure oil) discharged from the hydraulic pump 20 enters the hydraulic motor 22 via the high pressure oil line 24 to drive the hydraulic motor 22. The operating oil (low pressure oil) having performed the work in the hydraulic motor 22 then enters the hydraulic pump 20 via the low pressure oil line 26. The operating oil is pressurized in the hydraulic pump 20 and then returns to the hydraulic motor 22 via the high pressure oil line 24.

The generator 6 connected to the hydraulic motor 22 is a synchronous generator connected to the grid 27 via a circuit breaker 25.

The main shaft 2C includes a front part 110 disposed nearer to the hub 2B and a rear part 112 disposed farther from the hub 2B. A stepped portion 112 is provided between the front part 110 and the rear part 112 and the front part 110 has a larger diameter than the rear part 112.

In the example illustrated in FIG.2, a pair of main shaft bearings 3 (3A, 3B) for rotatably supporting the main shaft 2C are provided. More specifically, the front main shaft bearing 3A rotatably supports the front part 110 of the main shaft 2C and the rear main shaft bearing 3B rotatably supports the rear part 112 of the main shaft 2C. The main shaft bearings 3 (3A, 3B) are housed in bearing housings 116, respectively. From a perspective of improving strength against bending load and the like of the rotor 2, the bearing housings 116 are connected to each other by a connection frame 117 and the nacelle 8.

Each of the bearing housings 116 is supported by the nacelle 8. For instance, in the case where the nacelle 8 is formed by a nacelle baseplate 8A supported rotatably by the tower and a cover 8B for covering the nacelle baseplate 8A, each of the bearing housings 116 may be supported by the nacelle baseplate 8A or by the nacelle cover 8B.

The front part 110 of the main shaft 2C is configured so that a front end nearer to the hub 2B protrudes outward in the radial direction of the main shaft 2C to form a flange 111. The flange 111 of the front part 110 is fastened to the hub 2B by bolts 114. In this case, a brake disk 130 for locking the rotor 2 is fastened together with the flange 111 and the hub 2B. By being sandwiched by a brake caliper 134, the brake disk 130 applies a large braking force to the main shaft 2C to which the brake disk 130 is fastened.

A turning disk 140 is attached to the main shaft 2C. On an outer periphery of the turning disk 140, a gear 142 is formed. This turning disk 140 is configured rotatable using a turning unit 150 which is described later. With this configuration, the rotor 2 having been temporarily stopped can be rotated to a target angular position.

Further, the nacelle 8 has an opening 141 at a bottom for lifting and lowering the hydraulic motor 22 and other parts to and from the ground during maintenance. In the case illustrated in FIG.2, the turning disk 140 is displaced from the opening 141 so as to avoid interference when transferring parts through the opening 141. As a result, during the operation or maintenance, the turning unit 150 for driving the turning disk 140 can be installed permanently.

In the wind turbine generator 1 using the hydraulic transmission 4 like this embodiment, a rotational torque necessary for the turning operation needs to be applied to the main shaft 2C side which rotates with the rotor 2. In this embodiment, as described below, the rotational torque is amplified by speed reduction performed by the switching system and the amplified rotational torque is transmitted to the rotation shaft 2C side. This accompanies no increase in size or cost of the turning unit 150.

In this embodiment, the wind turbine generator 1 using the hydraulic transmission 4 is described. However, this is not limitative and the present invention is also applicable, by providing the turning disk 140 to the main shaft 2C, to a direct-drive wind turbine generator whose main shaft 2C is directly connected to a rotation shaft of the generator 6 and rotates at the same speed as the rotation shaft. FIG.3 is a schematic view of an inner structure of the nacelle 8 of the direct-drive wind turbine generator. As illustrated in FIG.3, the main shaft 2C is directly connected to the rotation shaft of the generator 6 and the turning disk 140 with a large diameter than the main shaft 2C is provided.

Next, the structure of the turning unit 150 of the wind turbine generator 1 is described in details. FIG.4 is a cross-sectional view of a configuration example of the turning unit 150 in relation to the first embodiment. FIG.5 is a cross-sectional view taken along a line A-A of FIG.4. FIG.6 is a conceptual diagram schematically illustrating a transmission of power in the turning unit 150 of FIG.4.

As illustrated in FIG.4, the turning unit 150 is configured to include: a turning motor 152 functioning as a driving source for outputting a rotational torque to rotate the turning disk 140; a planetary gear system 154 for reducing the rotational torque outputted from the turning motor 152 and transmitting the rotational torque to the turning disk 140 side; and a pinion gear 156 provided between the planetary gear system 154. In the turning disk 140, the rotational torque is transmitted from the turning motor 152 via the planetary gear system 154 and the pinion gear 156 so as to rotate the main shaft 2C.

The planetary gear system 154 is configured to include a carrier 158, a plurality of planetary gears 160 supported by the carrier 158, and a ring gear 162 and a sun gear 164 meshing with the plurality of planetary gears 160. The plurality of planetary gears 160 are supported by a plurality of planetary pins 159 via bearings 161 attached to the planetary pins 159 supported by the carrier 158 although not shown in the drawing. The carrier 158 is a supporting plate for supporting the plurality of planetary pins 159 (three planetary pins in this case) so as to cause the planetary gears 160 to revolve integrally.

The sun gear 164 of the planetary gear system 154 is connected to a rotation shaft 155 of the turning motor 152. The pinion gear 156 meshing with the turning disk 140 is connected to the carrier 158. The rotation from the turning motor 152 is decelerated by this type of planetary gear system 154 and the rotational torque is transmitted to the pinion gear 156 side. Thus, it is possible to rotate the main shaft 2C with relatively small rotational torque.

The plurality of planetary gears 160 meshes with an internal gear 157 of the ring gear 162 of the planetary gear system 154, whereas a first brake system 168 is connected to an external gear 159 via a brake gear 166. The first brake system 168 is configured to generate a braking force by sandwiching a brake disk 170 of a disk shape by a brake caliper 172. The brake disk 170 is connected to the brake gear 166.

A second brake system 176 is connected to a motor rotation shaft 174 of the turning motor 152. The second brake system 176 is configured to generate a braking force by sandwiching a brake disk 178 of a disk shape by a brake caliper 180. The brake disk 178 is connected to the motor rotation shaft 174.

In the turning unit 150 according to this embodiment, it is possible to switch a state of the main shaft 2C among a turning state, a non-turning state and a braking state by controlling operation of the turning motor 152, the first brake system 168 and the second brake system 176. This type of control is performed by sending a control signal from the turning controller 40 (see FIG.1) to the turning motor 152, the first brake system 168 and the second brake system 176, and vice versa.

Further, this type of turning unit 150 is housed in a casing body 190 and unitized.

The turning motor 152, the main shaft 2C and the first brake system 168 may be connected to the planetary gear system 154 of this embodiment in many different ways. More specifically, one of the turning motor 152, the main shaft 2C or the first brake system 168 may be connected to one of the planetary gear 160, the ring gear 162 or the sun gear 164; another of the turning motor 152, the main shaft 2C or the first brake system 168 may be connected to another of the planetary gear 160, the ring gear 162 or the sun gear 164; and the other of the turning motor 152, the main shaft 2C or the first brake system 168 may be connected to the other of the planetary gear 160, the ring gear 162 or the sun gear 164. Particularly in this embodiment, with the above-described connection pattern illustrated in FIG.4 to FIG.6, the rotational torque outputted from the turning motor 152 can be transmitted to the main shaft 2C with a high reduction ratio.

A detailed explanation is provided as to how the state of the main shaft 2C is switched among the turning state, the non-turning state and the braking state by controlling the turning unit 150 having the above structure. FIG.7 is a table showing states of each of the turning motor 152, the first brake system 168 and the second brake system 176.

A behavior example in the turning state when the main shaft 2C is turned using the turning unit 150 is now explained. In the turning state, the first brake system 168 is set ON so as to stop and lock the ring gear 162 connected to the first brake system 168. Further, the second brake system 176 is set OFF and the turning motor 152 is set ON to output a rotational torque. In this manner, the ring gear 162 is locked by the first brake system 168 and thus the rotational torque outputted from the turning motor 152 connected to the sun gear 164 is transmitted to the planetary gears 160. As a result, the rotational torque transmitted to the planetary gears 160 is then transmitted from the pinion gear 156 to the turning disk 140 via the carrier 158. As a result, the main shaft 2C having the turning disk 140 attached thereto is turned by the rotational torque outputted from the turning motor 152 due to speed reduction performed by the planetary gear system 154.

The planetary gear system 154 provided between the turning disk 140 and the turning motor 152 functions as a reduction gear. The rotational torque outputted from the turning motor 152 is decelerated by the planetary gear system 154 and then transmitted to the main shaft 2C. Thus, it requires a relatively small rotational torque for the turning motor 152 during the turning operation.

A behavior example in the non-turning state when the turning unit 150 is disengaged from the main shaft 2C side while the main shaft 2C rotates such as during the normal operation of the wind turbine generator 1 is now explained. In the non-turning state, the turning motor 152 is set OFF to avoid wasting the power output, and the second brake system 176 is set ON so as to prevent the stopped turning motor 152 from being driven by the rotational torque from the main shaft 2C side. As a result, it is possible to prevent failure caused when the stopped turning motor 152 is carelessly driven (e.g. occurrence of malfunction such as engine seizure when the turning motor 152 is driven and electric power is generated, resulting in heat generation).

In the non-turning state, by setting the first brake system 168 OFF, it prohibits the first brake system 168 from applying the braking force to the ring gear 162 connected to the first brake system 168. As a result, even when the rotational torque of the main shaft 2C is transmitted to the planetary gear system 154 via the turning disk 140 and the pinion gear 156, the ring gear 162 rotates at idle in the absence of the braking force. Thus, the rotation torque is not transmitted to the sun gear 164 side connected to the turning motor 152. More specifically, in the non-turning state, the ring gear 164 is free in the non-turning state and thus the turning motor 152 is disabled from the main shaft 2C side. By using the planetary gear system 154 in the above manner, the non-turning state can be achieved without disconnecting the turning unit 150 from the main shaft 2C side.

A behavior example in the braking state when the main shaft 2C is maintained in the stopped state by the turning unit 150, such as during maintenance or installation of the wind turbine generator 1, is now explained. In the braking state, the turning motor 152 is set OFF to avoid wasting the power output, and the first brake system 168 and the second brake system 176 are set ON. As a result, each gear constituting the planetary gear system 154 is locked to apply the braking force to the turning disk 140 connected via the pinion gear 156 so as to maintain the main shaft 2C in the stopped state.

As described above, in addition to the turning state and the non-turning state, the braking state is also selectable. The braking state is for maintaining the main shaft 2C, which is an object of the turning operation, in the stopped state. As a result, it is possible to improve safety using the turning unit 140 during maintenance or accessing of the helicopter.

In the braking state, the planetary gear system 154 itself is locked. Thus, there is an issue of breakage when the main shaft 2C is subjected to excessive input such as in the event of gust. Particularly in this embodiment, it is configured so that the braking force by the second brake system 176 is greater than the braking force by the first brake system 168. This allows the first brake system 168 side with smaller braking force than the second braking system 176 to slip when the main shaft 2C is subjected to excessive input in the braking state, thereby preventing breakage of the turning unit 150.

Particularly by allowing the first breaking unit 168 side to slip, it is possible to prevent the turning motor 152 from being driven carelessly even in the event of excessive input. As a result, it is now possible to effectively prevent occurrence of failure caused when the turning motor 152 is carelessly driven by the rotational torque transmitted from the main shaft 2C. As one example of this type of failure, malfunction occurs, such as engine seizure when the turning motor 152 is driven carelessly and electric power is generated, resulting in heat generation. In this embodiment, these situations can be effectively avoided and reliability is improved.

In the first embodiment, the switching system is formed by the planetary gear system 154 so that the turning unit 159 can be installed to the main shaft 2C permanently and it is no longer necessary for workers to install and remove the turning unit 150. Further, the rotational torque from the turning motor 152 as the driving source can be transmitted to the main shaft 2C at an appropriate reduction ratio of the planetary gear system 154. As a result, the turning operation can be achieved with a relatively small rotational torque and thus, it is possible to avoid increase in size of the turning unit 150.

### [SECOND EMBODIMENT]

A configuration of a turning unit 200 of the wind turbine generator 1 according to the second embodiment is described in details. FIG.8 is a plain view of a configuration example of the turning unit 200 according to the second embodiment. FIG.9 is a schematic view of the turning unit 200 of FIG.8 taken from a side.

The turning unit 200 includes a reduction gear system having a turning motor 202 and a plurality of parallel-axis gears. This reduction gear system is formed by a first gear 206, a second gear 208 and a third gear 210 each including a pinion and a gear whose rotational axes are parallel to each other. The first gear 206 is attached to an output shaft 204 of the turning motor 202. The second gear 208 is attached to a rotation shaft 212 and meshes with the first gear 206. The third gear 210 is attached to the rotation shaft 212 rotatably supported by a gearing and meshes with the gear 142 of the turning disk 140.

The torque outputted from the turning motor 202 is decelerated by the first gear 206, the second gear 208 and the third gear 210 and then inputted to the turning disk 140.

The first gear 206, the second gear 208 and the third gear 210 provided between the turning disk 140 and the turning motor 202 function as reduction gears. The rotational torque outputted from the turning motor 202 is decelerated by these gears and then transmitted to the main shaft 2C. Thus, the rotational torque that is outputted from the turning motor 202 during the turning operation is relatively small.

The third gear 210 meshing with the turning disk 140 is configured rotatable, by means of an actuator functioning as a driving unit, around the output shaft 204 connected to the third gear 210 in a direction of an arrow A in the drawing. As a result, it is possible to disengage the third gear 210 of the turning unit 200 from the gear 142 of the turning disk 140 or to bring the third gear 210 into engagement to mesh with the gear 142 of the turning disk 140.

In place of this disengaging behavior by the actuator, a clutch may be provided between these parallel-axis gears to change the transmission state of the power.

As a result, when performing the turning operation of the rotor 2, the third gear 210 of the turning unit 200 is moved to mesh with the gear 142 of the turning disk 140 (moved to an engaging position) so as to transmit the torque of the turning motor 202 to the turning disk 140. In other occasions, the third gear 210 of the turning unit 200 is disengaged from the gear 142 of the turning disk 140 (moved to a non-engaging position).

Further, the third gear 210 of the turning unit 200 may be disengaged from the gear 142 of the turning disk 140 in accordance with a command from a remote site.

According to this embodiment, the switching system performs switching operation of the turning unit 200 by moving the pinions, and the gears forming the parallel-axis gears are moved by the actuator. Through this switching operation of the turning unit 200 by the actuator, the state of the switching system is controlled and thus the turning unit 200 can be installed to the main shaft 2C permanently and it is no longer necessary for workers to install and remove the turning unit 200.

More than one turning unit 200 may be provided for the turning disk 140 as illustrated in FIG.10. As a result, even larger torque can be inputted to the turning disk 140.

As described above, in the power generating apparatus of the renewable energy type according to the above embodiments, the main shaft can be rotated by the turning unit including the switching system. The state of the main shaft is selectable by the switching system from the turning state, the non-turning state and further the breaking state. Thus, it is possible to turn the rotor having been decelerated or stopped to any angular position without requiring complicated operations.

### [Reference Numerals]

- 1: WIND TURBINE GENERATOR
- 2: ROTOR
- 2A: BLADE
- 2B: HUB
- 2C: MAIN SHAFT
- 3: MAIN SHAFT BEARING
- 4: HYDRAULIC TRANSMISSION
- 6: GENERATOR
- 7: TOWER
- 8: NACELLE
- 9: LOCKIING PIN
- 20: HYDRUALIC PUMP
- 22: HYDRAULIC MOTOR
- 24: HIGH PRESSURE OIL LINE
- 26: LOW PRESSURE OIL LINE
- 30: CONTROL UNIT
- 40: TURNING CONTROLLER
- 80: OIL TANK
- 84: PUMP
- 140: TURNING DISK
- 150: TURNING UNIT (FIRST EMBODIMENT)
- 152: TURNING MOTOR
- 154: PLANETARY GEAR SYSTEM
- 156: PINION GEAR
- 159: PLANETARY PIN
- 160: PLANETARY GEAR
- 162: RING GEAR
- 164: SUN GEAR
- 166: BRAKE GEAR
- 168: FIRST BRAKE SYSTEM
- 170: BRAKE DISK
- 172: BRAKE CALIPER
- 174: MOTOR ROTATION SHAFT
- 176: SECOND BRAKE SYSTEM
- 178: BRAKE DISK
- 180: BRAKE CALIPER
- 182: ROTATION SHAFT
- 190: CASING
- 200: TURNING UNIT (SECOND EMBODIMENT)
- 202: TURNING MOTOR
- 204: OUTPUT SHAFT
- 206: FIRST GEAR
- 208: SECOND GEAR
- 210: THIRD GEAR
- 212: ROTATION SHAFT

## Claims

1. A power generating apparatus of a renewable energy type for generating electric power using renewable energy, comprising:
a blade (2A);
a hub (2B) to which the blade (2A) is mounted;
a main shaft (2C) connected to the hub (2B) so as to rotate with the hub (2B);
a generator (6) configured to be driven by rotation of the main shaft (2C);
a turning unit (150) comprising:
a driving source (152) configured to output a rotational torque for rotating the main shaft (2C); and
a switching system (154) provided between the driving source (152) and the main shaft (2C) and configured to switch a state of the main shaft (2C) between: a turning state for turning the main shaft (2C) by transmission of the rotational torque from the driving source (152) to the main shaft (2C); and a non-turning state for disabling the transmission of the rotational torque between the driving source (152) and the main shaft (2C).
the power generating apparatus being **characterized in that** it further comprises:
a turning disk (140) provided on the main shaft (2C), the turning disk (140) having a larger diameter than the main shaft (2C); and
a reduction gear (206, 208, 210) provided between the turning disk (140) and the switching system (154),
wherein, in the turning state, the rotational torque outputted from the driving source (152) is transmitted to the turning disk (140) via the reduction gear (206, 208, 210) so as to rotate the main shaft (2C).

2. The power generating apparatus of the renewable energy type according to claim 1, further comprising:
a first braking unit (168) for outputting a braking torque, and
wherein the switching system (154) is configured to further select a braking state for transmitting the braking torque from the first braking unit (168) to the main shaft (2C).

3. The power generating apparatus of the renewable energy type according to claim 1,
wherein the switching system (154) comprises:
a plurality of parallel-axis gears including a pinion and a gear whose rotational axes are parallel to each other; and
a driving unit for moving the pinion and the gear into an engaging position in the turning state and moving the pinion and the gear into a non-engaging position in the non-turning state.

4. The power generating apparatus of the renewable energy type according to claim 1, further comprising:
a hydraulic pump (20) configured to be driven by rotation of the hub (2B); and
a hydraulic motor (22) configured to be driven by operating oil pressurized by the hydraulic pump (20) so as to drive the generator (6).

5. The power generating apparatus of the renewable energy type according to claim 1,
wherein the main shaft (2C) is directly connected to a rotation shaft (182) of the generator (6) so as to rotate at the same speed as the rotation shaft (182).

6. The power generating apparatus of the renewable energy type according to claim 1, further comprising:
a control unit (30) for controlling switching of the switching system (154).

7. The power generating apparatus of the renewable energy type according to claim 1,
wherein the power generating apparatus of the renewable energy type is a wind turbine generator (1) for generating power using wind power in a form of the renewable energy.

8. The power generating apparatus of a renewable energy type according to claim 2, wherein
the switching system (154) includes a planetary gear system comprising: a sun gear (164) connected to the driving source (152); a planetary gear (160) connected to the main shaft (2C); and a ring gear (162) connected to a first braking unit (168), and
wherein the power generating apparatus is configured to rotate the main shaft (2C) in the turning state by stopping and locking the ring gear (162) by the first braking unit (168) and outputting the rotational torque from the driving source (152),
the power generating apparatus of the renewable energy type further comprising a second braking unit (176) for controlling braking of the driving source (152),
and the power generating apparatus being configured to rotate the ring gear (162) at idle in the non-turning state by stopping the driving source (152) by the second braking unit (176) to lock the sun gear (164) and stopping the braking force from the first braking unit (168).

9. The power generating apparatus of the renewable energy type according to claim 8, wherein
the switching system (154) is configured to further select a braking state for stopping the main shaft (2C), and
the power generating apparatus is configured to stop the main shaft (2C) in the braking state by stopping and locking the ring gear (162) by the first braking unit (168) and stopping and locking the sun gear (164) by the second braking unit (176).

## Patentansprüche

1. Energieerzeugungsvorrichtung vom Typ erneuerbare Energie zum Erzeugen von elektrischer Energie mittels erneuerbarer Energie, umfassend:
ein Rotorblatt (2A),
eine Nabe (2B), an der das Rotorblatt (2A) angebracht ist,
eine Hauptwelle (2C), die mit der Nabe (2B) verbunden ist, um sich mit der Nabe (2B) mitzudrehen,
einen Generator (6), der dazu ausgebildet ist, durch Rotation der Hauptwelle (2C) angetrieben zu werden,
eine Dreheinheit (150), umfassend:
eine Antriebsquelle (152), die dazu ausgebildet ist, ein Drehmoment zum Drehen der Hauptwelle (2C) abzugeben, und
ein Schaltsystem (154), das zwischen der Antriebsquelle (152) und der Hauptwelle (2C) vorgesehen ist und dazu ausgebildet ist, einen Zustand der Hauptwelle (2C) umzuschalten zwischen: einem Drehzustand zum Drehen der Hauptwelle (2C) durch Übertragung des Drehmoments von der Antriebsquelle (152) auf die Hauptwelle (2C), und einem Nichtdrehzustand zum Deaktivieren der Übertragung des Drehmoments zwischen der Antriebsquelle (152) und der Hauptwelle (2C),
wobei die Energieerzeugungsvorrichtung **dadurch gekennzeichnet ist, dass** sie ferner umfasst:
eine Drehscheibe (140), die an der Hauptwelle (2C) vorgesehen ist, wobei die Drehscheibe (140) einen größeren Durchmesser als die Hauptwelle (2C) aufweist, und
ein Reduktionsgetriebe (206, 208, 210), das zwischen der Drehscheibe (140) und dem Schaltsystem (154) vorgesehen ist,
wobei in dem Drehzustand das von der Antriebsquelle (152) abgegebene Drehmoment über das Reduktionsgetriebe (206, 208, 210) auf die Drehscheibe (140) übertragen wird, um die Hauptwelle (2C) zu drehen.

2. Energieerzeugungsvorrichtung vom Typ erneuerbare Energie nach Anspruch 1, ferner umfassend:
eine erste Bremseinheit (168) zum Erzeugen eines Bremsmoments, und
wobei das Schaltsystem (154) dazu ausgebildet ist, ferner einen Bremszustand zum Übertragen des Bremsmoments von der ersten Bremseinheit (168) auf die Hauptwelle (2C) auszuwählen.

3. Energieerzeugungsvorrichtung vom Typ erneuerbare Energie nach Anspruch 1, wobei das Schaltsystem (154) umfasst:
mehrere parallelachsige Getriebe, die ein Ritzel und ein Zahnrad umfassen, deren Drehachsen parallel zueinander sind, und
eine Antriebseinheit zum Bewegen des Ritzels und des Zahnrads in eine Eingriffsposition in dem Drehzustand und zum Bewegen des Ritzels und des Zahnrads in eine Nichteingriffsposition in dem Nichtdrehzustand.

4. Energieerzeugungsvorrichtung vom Typ erneuerbare Energie nach Anspruch 1, ferner umfassend:
eine Hydraulikpumpe (20), die dazu ausgebildet ist, durch Drehung der Nabe (2B) angetrieben zu werden,
und
einen Hydraulikmotor (22), der dazu ausgebildet ist, durch Betriebsöl, das durch die Hydraulikpumpe (20) unter Druck gesetzt wird, angetrieben zu werden, um den Generator (6) anzutreiben.

5. Energieerzeugungsvorrichtung vom Typ erneuerbare Energie nach Anspruch 1,
wobei die Hauptwelle (2C) direkt mit einer Drehwelle (182) des Generators (6) verbunden ist, um sich mit derselben Geschwindigkeit wie die Drehwelle (182) zu drehen.

6. Energieerzeugungsvorrichtung vom Typ erneuerbare Energie nach Anspruch 1, ferner umfassend:
eine Steuerungseinheit (30) zum Steuern des Umschaltens des Schaltsystems (154).

7. Energieerzeugungsvorrichtung vom Typ erneuerbare Energie nach Anspruch 1,
wobei die Energieerzeugungsvorrichtung vom Typ erneuerbare Energie eine Windkraftanlage (1) zum Erzeugen von Energie mittels Windkraft als erneuerbare Energie ist.

8. Energieerzeugungsvorrichtung vom Typ erneuerbare Energie nach Anspruch 2, wobei
das Schaltsystem (154) ein Planetengetriebesystem umfasst, umfassend: ein Sonnenrad (164), das mit der Antriebsquelle (152) verbunden ist, ein Planetenrad (160), das mit der Hauptwelle (2C) verbunden ist, und ein Hohlrad (162), das mit einer ersten Bremseinheit (168) verbunden ist, und
wobei die Energieerzeugungsvorrichtung dazu ausgebildet ist, die Hauptwelle (2C) in dem Drehzustand durch Stoppen und Verriegeln des Hohlrads (162) durch die erste Bremseinheit (168) und Abgeben des Drehmoments von der Antriebsquelle (152) zu drehen,
die Energieerzeugungsvorrichtung vom Typ erneuerbare Energie ferner eine zweite Bremseinheit (176) zum Steuern des Bremsens der Antriebsquelle (152) umfasst,
und die Energieerzeugungsvorrichtung dazu ausgebildet ist, in dem Nichtdrehzustand durch Stoppen der Antriebsquelle (152) durch die zweite Bremseinheit (176), um das Sonnenrad (164) zu verriegeln, und Stoppen der Bremskraft von der ersten Bremseinheit (168) das Hohlrad (162) im Leerlauf zu drehen.

9. Energieerzeugungsvorrichtung vom Typ erneuerbare Energie nach Anspruch 8, wobei
das Schaltsystem (154) dazu ausgebildet ist, ferner einen Bremszustand zum Stoppen der Hauptwelle (2C) auszuwählen, und
die Energieerzeugungsvorrichtung dazu ausgebildet ist, die Hauptwelle (2C) in dem Bremszustand durch Stoppen und Verriegeln des Hohlrads (162) durch die erste Bremseinheit (168) und Stoppen und Verriegeln des Sonnenrads (164) durch die zweite Bremseinheit (176) zu stoppen.

## Revendications

1. Appareil de génération d'énergie d'un type à énergie renouvelable destiné à générer de l'énergie électrique en utilisant de l'énergie renouvelable, comportant :
une pale (2A) ;
un moyeu (2B) sur lequel la pale (2A) est montée ;
un arbre principal (2C) relié au moyeu (2B) de façon à tourner avec le moyeu (2B) ;
une génératrice (6) configurée pour être entraînée par une rotation de l'arbre principal (2C) ;
une unité de rotation (150) comportant :
une source d'entraînement (152) configurée pour délivrer un couple de rotation pour faire tourner l'arbre principal (2C) ; et
un système de commutation (154) prévu entre la source d'entraînement (152) et l'arbre principal (2C) et configuré pour commuter un état de l'arbre principal (2C) entre : un état de rotation pour faire tourner l'arbre principal (2C) par transmission du couple de rotation de la source d'entraînement (152) à l'arbre principal (2C) ; et un état de non-rotation destiné à empêcher la transmission du couple de rotation entre la source d'entraînement (152) et l'arbre principal (2C),
l'appareil de génération d'énergie étant **caractérisé en ce qu'**il comporte en outre :
un disque de rotation (140) prévu sur l'arbre principal (2C), le disque de rotation (140) ayant un plus grand diamètre que l'arbre principal (2C) ; et
un réducteur (206, 208, 210) prévu entre le disque de rotation (140) et le système de commutation (154),
dans lequel, dans l'état de rotation, le couple de rotation délivré par la source d'entraînement (152) est transmis au disque de rotation (140) par l'intermédiaire du réducteur (206, 208, 210) de façon à faire tourner l'arbre principal (2C).

2. Appareil de génération d'énergie du type à énergie renouvelable selon la revendication 1, comportant en outre :
une première unité de freinage (168) destinée à délivrer un couple de freinage, et
dans lequel le système de commutation (154) est configuré pour sélectionner en outre un état de freinage pour transmettre le couple de freinage de la première unité de freinage (168) à l'arbre principal (2C).

3. Appareil de génération d'énergie du type à énergie renouvelable selon la revendication 1,
dans lequel le système de commutation (154) comporte :
une pluralité d'engrenages à axe parallèle comprenant un pignon et un engrenage dont les axes de rotation sont parallèles les uns aux autres ; et
une unité d'entraînement destinée à déplacer le pignon et l'engrenage dans une position d'engagement dans l'état de rotation et déplacer le pignon et l'engrenage dans une position de non-engagement dans l'état de non-rotation.

4. Appareil de génération d'énergie du type à énergie renouvelable selon la revendication 1, comportant en outre :
une pompe hydraulique (20) configurée pour être entraînée par la rotation du moyeu (2B) ; et
un moteur hydraulique (22) configuré pour être entraîné par de l'huile d'actionnement mise en pression par la pompe hydraulique (20) de façon à entraîner la génératrice (6).

5. Appareil de génération d'énergie du type à énergie renouvelable selon la revendication 1,
dans lequel l'arbre principal (2C) est directement relié à un arbre de rotation (182) de la génératrice (6) de façon à tourner à la même vitesse que l'arbre de rotation (182).

6. Appareil de génération d'énergie du type à énergie renouvelable selon la revendication 1, comportant en outre :
une unité de commande (30) destinée à commander une commutation du système de commutation (154).

7. Appareil de génération d'énergie du type à énergie renouvelable selon la revendication 1,
dans lequel l'appareil de génération d'énergie du type à énergie renouvelable est une éolienne (1) destinée à générer de l'énergie en utilisant l'énergie éolienne sous forme de l'énergie renouvelable.

8. Appareil de génération d'énergie d'un type à énergie renouvelable selon la revendication 2, dans lequel
le système de commutation (154) comprend un système d'engrenage planétaire comportant : un pignon central (164) relié à la source d'entraînement (152) ; un engrenage planétaire (160) relié à l'arbre principal (2C) ; et une couronne dentée (162) reliée à une première unité de freinage (168), et
dans lequel l'appareil de génération d'énergie est configuré pour faire tourner l'arbre principal (2C) dans l'état de rotation en arrêtant et en bloquant la couronne dentée (162) grâce à la première unité de freinage (168) et en délivrant le couple de rotation provenant de la source d'entraînement (152),
l'appareil de génération d'énergie du type à énergie renouvelable comportant en outre une deuxième unité de freinage (176) destinée à commander un freinage de la source d'entraînement (152),
et l'appareil de génération d'énergie étant configuré pour faire tourner la couronne dentée (162) dans le vide dans l'état de non-rotation en arrêtant la source d'entraînement (152) grâce à la deuxième unité de freinage (176) pour bloquer le pignon central (164) et en arrêtant la force de freinage provenant de la première unité de freinage (168).

9. Appareil de génération d'énergie du type à énergie renouvelable selon la revendication 8, dans lequel
le système de commutation (154) est configuré pour sélectionner en outre un état de freinage pour arrêter l'arbre principal (2C), et
l'appareil de génération d'énergie est configuré pour arrêter l'arbre principal (2C) dans l'état de freinage en arrêtant et en bloquant la couronne dentée (162) grâce à la première unité de freinage (168) et en arrêtant et en bloquant le pignon central (164) grâce à la deuxième unité de freinage (176) .
